# FASCICULE DE BREVET EUROPEEN

(11) **EP 3 253 951 B1**
(45) Date de publication et mention de la délivrance du brevet: **21.10.2020**
(21) Numéro de dépôt: 16707862.5
(22) Date de dépôt: 02.02.2016
(51) Int. Cl.: F16B 1/00, F01D 9/04, F16B 37/14

(54) **BOUCHON ANTI-CORROSION POUR COMBLER UN ORIFICE DE FIXATION ET SYSTÈME COMPRENANT LEDIT BOUCHON**
KORROSIONSSCHUTZSTOPFEN ZUM VERSCHLIESSEN EINER BEFESTIGUNGSÖFFNUNG UND SYSTEM MIT DIESEM STOPFEN
CORROSION PROTECTION PLUG FOR FILLING AN ATTACHMENT OPENING, AND SYSTEM INCLUDING SAID PLUG

(30) Priorité: 03.02.2015 FR 1550822
(43) Date de publication de la demande: 13.12.2017
(73) Titulaire: SAFRAN AIRCRAFT ENGINES, 75015 Paris (FR)
(72) Inventeur: CHEVALLIER, Pierrick, 94700 Maisons-Alfort (FR); REGHEZZA, Patrick, Jean-Louis, 77000 Vaux le Penil (FR)
(74) Mandataire: Cabinet Camus Lebkiri
(86) Numéro de dépôt international: PCT/FR2016/050217
(87) Numéro de publication internationale: WO 2016/124853

(56) Documents cités:
- DE-A1- 2 539 551
- DE-A1- 10 156 876
- JP-A- 2006 242 339
- JP-A- 2009 127 729
- US-A- 4 850 778

## Description

### DOMAINE TECHNIQUE DE L'INVENTION

Le domaine de l'invention est relatif au domaine des redresseurs de turbomachine et plus particulièrement aux aubes de redresseurs.

### ARRIÈRE PLAN TECHNOLOGIQUE DE L'INVENTION

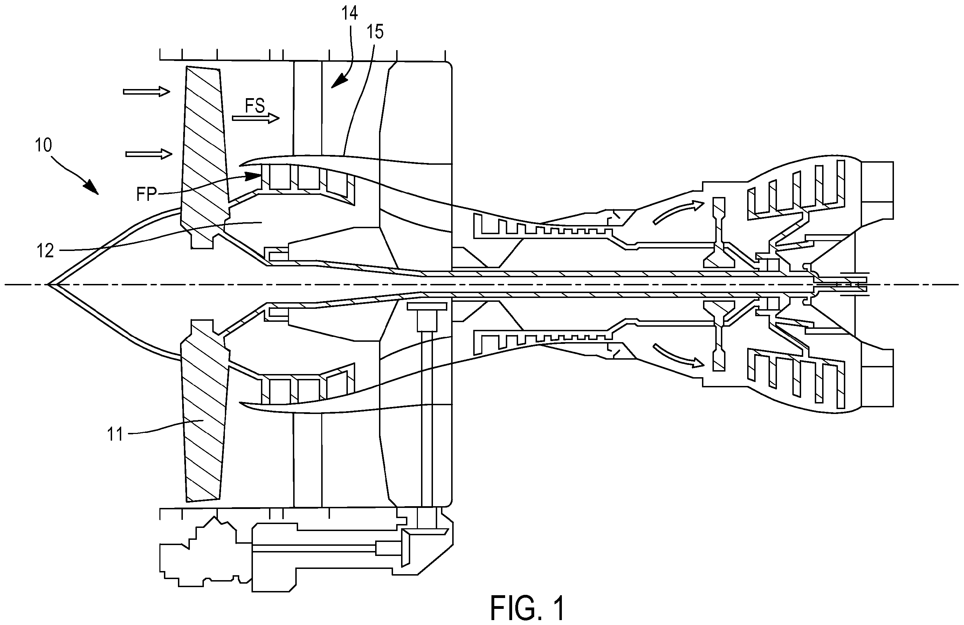

Une turbomachine 10 à double flux pour la propulsion aéronautique est représentée schématiquement à la figure 1. Elle comprend une soufflante 11 délivrant un flux d'air dont une partie centrale, appelée flux primaire FP, est injectée dans un compresseur 12 qui alimente une turbine entraînant la soufflante 11.

La partie périphérique, appelée flux secondaire FS, du flux d'air est quant à elle éjectée vers l'atmosphère pour fournir une partie de la poussée de la turbomachine 10, après avoir franchi une couronne d'aubes fixes disposée en aval de la soufflante 11. Cette couronne, appelée redresseur 14 (également connue sous l'acronyme anglais OGV pour « Outlet Guide Vane ») permet de redresser le flux d'air en sortie de la soufflante 11 tout en limitant les pertes au maximum.

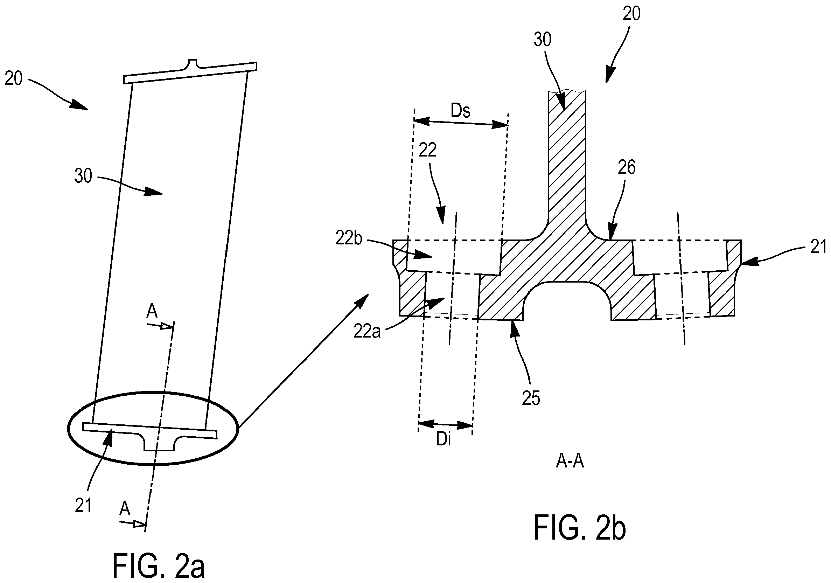

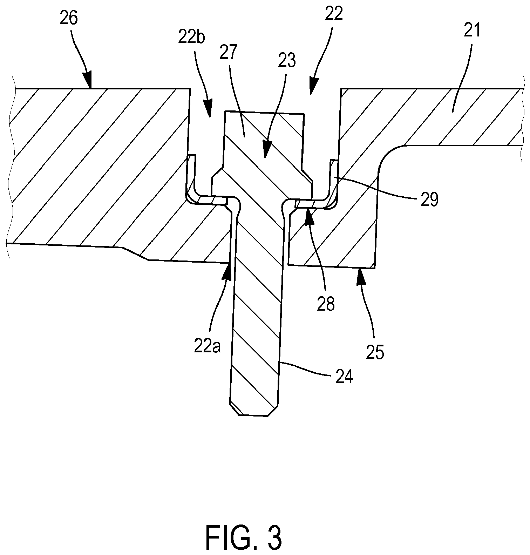

La figure 2a illustre schématiquement une aube 20 de redresseur 14 comportant notamment un corps 30 et un pied 21, tandis que la figure 2b est un agrandissement du pied 21 de ladite aube 20 selon un plan de coupe A-A. Les aubes du redresseur 14 sont destinées à être fixées sur un moyeu 15. A cet effet, le pied 21 de l'aube 20 comporte deux orifices de fixation 22 situés de part et d'autre du corps 30, permettant de recevoir des moyens de vissage pour relier mécaniquement l'aube 20 au moyeu 15. Un orifice de fixation 22 dans lequel est positionné un moyen de vissage 23 est représenté à la figure 3.

Chaque orifice de fixation 22 comporte :
- une partie inférieure 22a cylindrique débouchant au niveau d'une surface inférieure 25 du pied 21 de l'aube 20, adaptée pour le passage d'une tige 24 du moyen de vissage 23
- une partie supérieure 22b cylindrique débouchant au niveau d'une surface supérieure 26 du pied 21, adaptée pour le passage d'une tête 27 du moyen de vissage 23
- un épaulement 28 entre la partie supérieure 22b et la partie inférieure 22a, tel que la partie supérieure 22b présente un diamètre Ds supérieur au diamètre Di de la partie inférieure 22a.

En outre, une bague ou coupelle 29 est destinée à être positionnée dans la partie supérieure 22b entre la tête 27 du moyen de vissage 23 et l'épaulement 28, de la manière représentée à la figure 3. La coupelle 29 permet d'éviter le matage ou le marquage de l'épaulement 28 par le moyen de vissage 23.

Or il a été constaté de la corrosion au niveau des orifices de fixation 22, s'expliquant par la présence d'eau stagnante dans les parties supérieures 22b desdits orifices 22.

Une première solution à ce problème consiste à reformer les orifices de fixation, puis éventuellement à mettre en place des douilles dans lesdits orifices. Cependant, une fois ces réparations réalisées, l'eau peut de nouveau stagner dans les parties supérieures des orifices de fixation et ainsi provoquer de nouveau la corrosion des orifices de fixation. De plus, les réparations successives finissent par fragiliser le pied d'aube, ce qui impacte sa durée de vie.

Une deuxième solution consiste à remplir les parties supérieures des orifices de fixation (une fois l'aube en position sur le moyeu) par un composé à base de silicone connu sous l'acronyme RTV Silicone pour « Room Température Vulcanizing » afin de boucher lesdits orifices. Or l'utilisation de ce composé à base de silicone nécessite un temps de séchage important et occasionne par conséquent une augmentation de la durée des opérations de montage. L'utilisation de silicone pour le remplissage des orifices de fixations augmente également le temps de démontage, notamment lors des opérations de maintenance car il est nécessaire de retirer le composé et de nettoyer les orifices avant remontage.

Une troisième solution est décrite dans la demande de brevet FR n°1454953. Selon cette troisième solution, et en référence aux figures 4a et 4b, des obturateurs 31 sont utilisés pour combler les parties supérieures 22b des orifices de fixation 22 après le montage des aubes 20 de redresseur 14 sur le moyeu 15. Un obturateur 31 comporte un bouchon 32 et une coupelle adaptée 35. La tête du moyen de vissage est destinée à être placé dans la coupelle 35 et à être recouverte par le bouchon 32. Par ailleurs, la coupelle 35 est destinée à être maintenue fixe dans l'orifice de fixation 22 par l'intermédiaire de pions 36. Une lumière 34 pratiquée sur une paroi latérale de la coupelle 35 permet de guider le bouchon 32 par emboîtement et coulissage d'une partie saillante 33 du bouchon 32 dans la lumière 34. Ce système mâle-femelle permet d'assurer le bon positionnement du bouchon 32 dans l'orifice de fixation 22. Un tel obturateur présente toutefois des inconvénients :
- il est nécessaire de modifier les coupelles habituellement utilisées, en réalisant des lumières dans lesdites coupelles, et en les équipant de pions,
- il est nécessaire d'effectuer deux perçages au niveau de la partie inférieure de l'orifice de fixation, de sorte à maintenir la coupelle dans la partie supérieure de l'orifice par l'intermédiaire des pions,
- la surface de contact entre le bouchon et le diamètre extérieur de l'orifice de fixation est faible, ce qui permet à l'eau de s'infiltrer autour du bouchon et peut être à l'origine d'un désengagement du bouchon durant le fonctionnement de la turbomachine.

Un autre bouchon de l'état de la technique est décrit dans le document JP2009127729.

### DESCRIPTION GÉNÉRALE DE L'INVENTION

Dans ce contexte, l'invention vise à fournir une solution pour éviter la corrosion d'un orifice de fixation d'un pied d'aube de redresseur, simple et rapide à mettre en œuvre, et ne nécessitant pas de modification de l'orifice de fixation ou de la coupelle.

Selon un premier aspect, l'invention concerne donc un bouchon pour empêcher la corrosion d'un orifice de fixation, comportant :
▪ une face inférieure comprenant une ouverture destinée à recevoir une tête d'un moyen de vissage,
▪ une face supérieure,
▪ une paroi latérale sensiblement cylindrique et s'étendant selon une direction axiale entre la face inférieure et la face supérieure, ladite paroi latérale comprenant une première zone latérale.

En outre, le bouchon est constitué d'un matériau déformable élastiquement, et présente un diamètre au repos et une élasticité lui permettant d'obstruer et d'être maintenu dans l'orifice de fixation par déformation élastique.

En outre, la face supérieure comporte au moins un premier trou borgne dont la forme est telle que lorsque le bouchon subit une déformation élastique faisant apparaître un bourrelet entre la face supérieure et la première zone latérale du bouchon, ledit bourrelet est éliminé par déformation élastique dudit premier trou borgne.

Le bouchon selon le premier aspect de l'invention permet de résoudre les problèmes préalablement cités.

En effet, le bouchon est composé d'un matériau déformable élastiquement, par exemple un élastomère, ce qui permet sa mise en place simple et rapide dans un orifice de taille appropriée par déformation élastique. En choisissant un bouchon dont les dimensions au repos sont légèrement supérieures à celles de l'orifice, le bouchon est inséré comprimé dans l'orifice de fixation, puis se détend après son introduction. Le bouchon obstrue alors complètement l'orifice pour empêcher l'infiltration d'eau au niveau de celui-ci, évitant ainsi sa corrosion. Par « au repos », on entend l'état dans lequel se trouve le bouchon lorsqu'il n'est pas déformé. De plus, les dimensions et le matériau utilisé permettent d'éviter le désengagement du bouchon lors du fonctionnement de la turbomachine.

Par ailleurs, le premier trou borgne permet d'éliminer les bourrelets de matière qui se forment lorsque le bouchon est en position dans l'orifice. En outre, le premier trou borgne permet de retirer le bouchon en utilisant un outil de retrait approprié, ce qui rend le bouchon facilement retirable et interchangeable.

Enfin, aucune modification de l'orifice et de la coupelle n'est requise. En effet, le bouchon inséré dans l'orifice suffit à obstruer ce dernier.

Le bouchon selon le premier aspect de l'invention peut également présenter une ou plusieurs des caractéristiques ci-dessous, considérées individuellement ou selon toutes les combinaisons techniquement possibles.

Selon un mode de réalisation non limitatif, le premier trou borgne comprend une partie extrémale borgne inclinée par rapport à la première zone latérale.

Cette configuration est telle que lorsque le bouchon subit une déformation élastique faisant apparaître un bourrelet entre la face supérieure et la première zone latérale du bouchon, ledit bourrelet est éliminé par déformation dudit premier trou borgne.

Selon un mode de réalisation non limitatif, l'angle d'inclinaison de la partie extrémale borgne par rapport à la première zone latérale est sensiblement compris entre 80 et 100 degrés, avantageusement 90 degrés.

Il s'agit de la configuration optimale pour éliminer les bourrelets de matière du bouchon.

Selon un mode de réalisation non limitatif, le premier trou borgne comporte une partie extrémale débouchante, ladite partie extrémale débouchante présentant une forme de fente.

Ainsi, la pointe d'un outil de retrait introduit dans la partie extrémale débouchante s'emboîte directement dans la partie extrémale borgne du premier trou par rotation de l'outil de retrait. On note que la partie extrémale débouchante est avantageusement orientée dans l'orifice de manière à ce que lorsque la pointe de l'outil de retrait est calée dans la partie extrémale borgne, le bouchon est retirable sans que l'outil ne soit gêné par la pâle. En effet, l'outil ne dispose alors que d'un seul degré de liberté : seules des rotations de l'outil dans un plan parallèle à la pâle sont possibles. Cela permet d'éviter que la pâle ne soit endommagée ou ne constitue un obstacle pour le retrait du bouchon.

Selon un mode de réalisation non limitatif, la face supérieure comporte un deuxième trou borgne, ledit deuxième trou borgne étant diamétralement opposé au premier trou borgne.

Le deuxième trou borgne est tel que lorsque le bouchon subit une déformation élastique faisant apparaître un bourrelet entre la face supérieure et une deuxième zone latérale de la paroi latérale diamétralement opposée à la première paroi latérale, ledit bourrelet est éliminé par déformation dudit deuxième trou borgne. Ainsi, des bourrelets de matière qui apparaissent suite à l'insertion du bouchon dans l'orifice de fixation sont éliminés de part et d'autre du bouchon.

Selon un mode de réalisation non limitatif, le premier trou borgne est positionné au centre de la face supérieure, et comporte une partie débouchante cylindrique suivi d'une partie borgne cylindrique, la partie extrémale borgne présentant un diamètre supérieur au diamètre de la partie extrémale débouchante.

Ainsi, lorsque la face inférieure et la face supérieure du bouchon sont parallèles, le bouchon peut être positionné dans l'orifice selon n'importe quelle orientation car il est symétrique. Cette configuration permet d'éviter toute erreur de placement lors du montage du bouchon dans l'orifice de fixation. La partie extrémale borgne étant de diamètre supérieur à celui de la partie extrémale débouchante, un calage de la pointe de l'outil de retrait dans la partie extrémale borgne est possible. Par ailleurs, le moule servant à la fabrication d'un tel bouchon est simple à réaliser.

Selon un mode de réalisation non limitatif, la paroi latérale comprend une succession d'ondulations circonférentielles et perpendiculaires à la direction axiale dudit bouchon.

Les ondulations présentes sur la paroi latérale du bouchon permettent d'améliorer la tenue et l'adhérence du bouchon dans l'orifice de fixation. De plus, de telles ondulations permettent d'éviter des bourrelets de matière qui apparaîtraient lorsque le bouchon est maintenu serré dans l'orifice.

Selon un mode de réalisation non limitatif, le matériau constituant le bouchon présente une dureté sensiblement comprise entre 30 et 80 shores.

Ainsi, le bouchon présente une dureté telle que celui-ci n'est pas endommagé par des contraintes environnementales, en particulier durant le fonctionnement de la turbomachine. La dureté du bouchon lui permet également de ne pas être rompu ou déchiré par le moyen de vissage ou par l'outil de retrait lors de son retrait de l'orifice de fixation. Grâce à un tel bouchon, la durée de vie du moyen de vissage et de la pièce comportant l'orifice est augmentée.

Selon un second aspect, l'invention a pour objet un système d'obturation comprenant :
▪ un orifice de fixation d'un pied d'aube, l'orifice de fixation comprenant une partie supérieure
▪ un bouchon selon le premier aspect.

Par pied, on entend indifféremment la plateforme radialement interne ou la plateforme radialement externe de l'aube 20 lorsque celle-ci est en position dans la turbomachine 10.

Le bouchon est de forme externe sensiblement complémentaire à la forme de la partie supérieure de l'orifice de fixation et de dimensions externes au repos supérieures aux dimensions de ladite partie supérieure.

Un tel système permet de réaliser un montage serré du bouchon dans l'orifice, évitant ainsi la pénétration d'eau dans l'orifice et donc la corrosion du moyen de vissage ou dudit orifice.

Selon un mode de réalisation non limitatif, la face supérieure du bouchon est inclinée par rapport à la face inférieure de sorte que lorsque le bouchon est placé dans l'orifice, la face supérieure du bouchon est dans la continuité géométrique du pied d'aube.

Un avantage d'une telle géométrie asymétrique est d'éviter toute perturbation du flux aérodynamique au niveau du pied de la pâle, la face supérieure du bouchon étant dans le prolongement de celle du pied de pâle.

Selon un mode de réalisation non limitatif, la face supérieure du bouchon comprend des repères visuels permettant de placer le bouchon dans la partie supérieure de l'orifice de fixation selon une position prédéterminée.

Ainsi, puisque le bouchon n'est pas symétrique, les repères visuels permettent d'aider à placer correctement le bouchon dans l'orifice et ainsi d'éviter toute erreur lors du montage. Dans un mode de réalisation, les repères visuels comportent une flèche permettant d'indiquer le sens dans lequel le bouchon doit être placé, par exemple un sens dans lequel la flèche pointe vers l'avant du moteur. De tels repères visuels permettent ainsi d'assurer un bon flux aérodynamique au niveau du pied de la pâle.

Selon un mode de réalisation non limitatif, le système comprend un moyen de vissage comportant :
▪ une tige destinée à être positionnée dans une partie inférieure de l'orifice de fixation
▪ une tête destinée à être positionnée dans la partie supérieure de l'orifice de fixation et bloquée par un épaulement entre la partie inférieure et la partie supérieure,
et l'ouverture pratiquée sur la face inférieure du bouchon présente une géométrie sensiblement complémentaire à celle de la tête du moyen de vissage.

Une telle ouverture permet de garantir le maintien du moyen de vissage dans la face inférieure du bouchon grâce à un montage légèrement serré tout en évitant la rotation du bouchon durant le fonctionnement de la turbomachine. En effet, lors de son fonctionnement, ladite turbomachine génère des vibrations se propageant notamment au niveau du redresseur. Par ailleurs, ladite ouverture permet également d'éviter des bourrelets de matière au niveau de l'ouverture.

Selon un mode de réalisation non limitatif, le système comporte une coupelle adaptée à être maintenue contre l'épaulement de l'orifice de fixation par la tête du moyen de vissage, et dans lequel :
▪ la tige du moyen de vissage est positionnée dans la partie inférieure de l'orifice de fixation,
▪ la coupelle est maintenue contre l'épaulement de l'orifice de fixation,
▪ la tête du moyen de vissage est positionnée et bloquée dans la partie supérieure de l'orifice de fixation contre la coupelle,
▪ le bouchon recouvre la tête du moyen de vissage,
la face inférieure du bouchon et la coupelle étant séparées d'une distance non nulle.

Une coupelle positionnée dans l'alésage borgne de l'orifice de fixation entre le moyen de vissage et l'épaulement dudit orifice permet d'éviter le matage ou le marquage des pièces. En effet, lors de son fonctionnement, une turbomachine produit des vibrations se propageant notamment dans l'orifice de fixation et donnant lieu à une zone de frottement entre le moyen de vissage et l'épaulement. La coupelle permet d'éviter ce frottement et ainsi d'augmenter la durée de vie de la pâle.

Un tel système permet de protéger l'orifice de fixation, la coupelle et le moyen de vissage de toutes agressions extérieures telles que des ingestions de gravillons, de sables etc. Par ailleurs, le système permet de conserver la graisse de lubrification placée entre la tige du moyen de vissage et la partie inférieure de l'orifice de fixation. De plus, la présence d'un espace entre la face inférieure du bouchon et la coupelle permet d'éviter la formation de bourrelets de matière du bouchon.

Enfin, selon un troisième aspect, l'invention a pour objet une aube de redresseur comportant un pied, ledit pied de l'aube comportant un système d'obturation selon le deuxième aspect.

L'invention sera mieux comprise à la lumière de la description qui suit et en référence aux figures dont la liste est donnée ci-dessous.

### BRÈVE DESCRIPTION DES FIGURES

Les figures ne sont présentées qu'à titre indicatif et nullement limitatif.
La figure 1, déjà décrite, représente schématiquement une turbomachine à double flux comportant un redresseur.
La figure 2a, déjà décrite, représente schématiquement une aube du redresseur présenté à la figure 1.
La figure 2b, déjà décrite, est un agrandissement d'un pied de l'aube présentée à la figure 2 selon une vue en coupe, le pied comportant deux orifices de fixation.
La figure 3, déjà décrite, est un agrandissement d'un orifice de fixation du pied d'aube présenté à la figure 2b, dans lequel est placé un moyen de vissage et une coupelle.

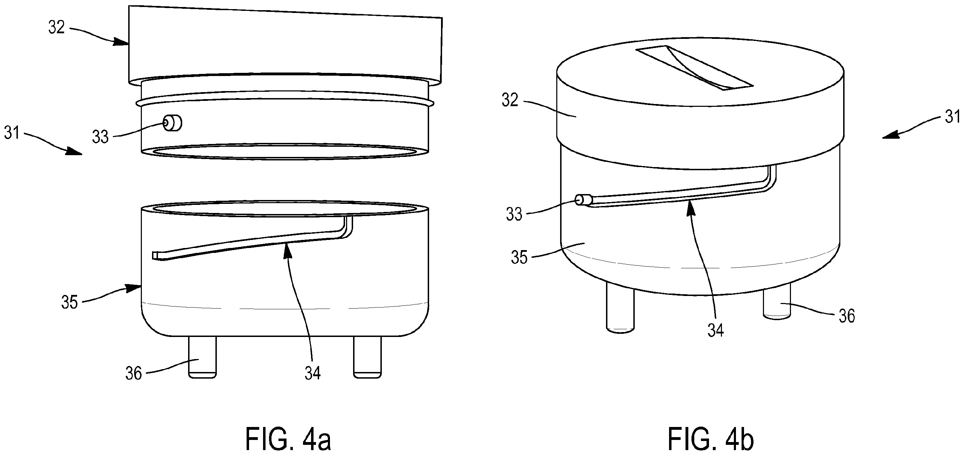

La figure 4a, déjà décrite, est une vue éclatée d'un obturateur de l'art antérieur destiné à être logé dans un orifice de fixation présenté à la figure 2b.
La figure 4b, déjà décrite, représente schématiquement l'obturateur assemblé présenté à la figure 4a.
La figure 5a est vue de dessus du pied d'aube de la figure 2b, et d'un système d'obturation comprenant un bouchon selon un premier mode de réalisation de l'invention.
La figure 5b est une vue latérale des éléments de la figure 5a.
La figure 6 montre une face inférieure d'un bouchon du système des figures 5a et 5b.
La figure 7 montre une face supérieure du bouchon de la figure 6.
La figure 8a montre le système d'obturation des figures 5a et 5b étant positionné dans un orifice de fixation de la figure 2b.
La figure 8b est un agrandissement d'une partie du bouchon montré à la figure 8a, subissant une déformation élastique formant un bourrelet.
La figure 8c montre la partie du bouchon présentée à la figure 8b, le bourrelet ayant été supprimé.
Les figures 9a, 9b et 9c représentent schématiquement des étapes d'extraction du bouchon de la figure 5a par un outil de retrait.
La figure 10a est une vue latérale d'un bouchon selon un deuxième mode de réalisation de l'invention.
La figure 10b montre un système d'obturation comprenant le bouchon de la figure 10a, positionné dans un orifice de fixation de la figure 2b.
La figure 11 représente un système d'obturation comprenant un bouchon selon un troisième mode de réalisation de l'invention, positionné un orifice de fixation de la figure 2b.
La figure 12 montre une face supérieure d'un bouchon selon un quatrième mode de réalisation de l'invention.
La figure 13 représente schématiquement un système d'obturation comprenant le bouchon de la figure 12, positionné dans un orifice de fixation de la figure 2b.

### DESCRIPTION DÉTAILLÉE DE MODES DE RÉALISATION DE L'INVENTION

Sauf précision contraire, un même élément apparaissant sur des figures différentes présente une référence unique.

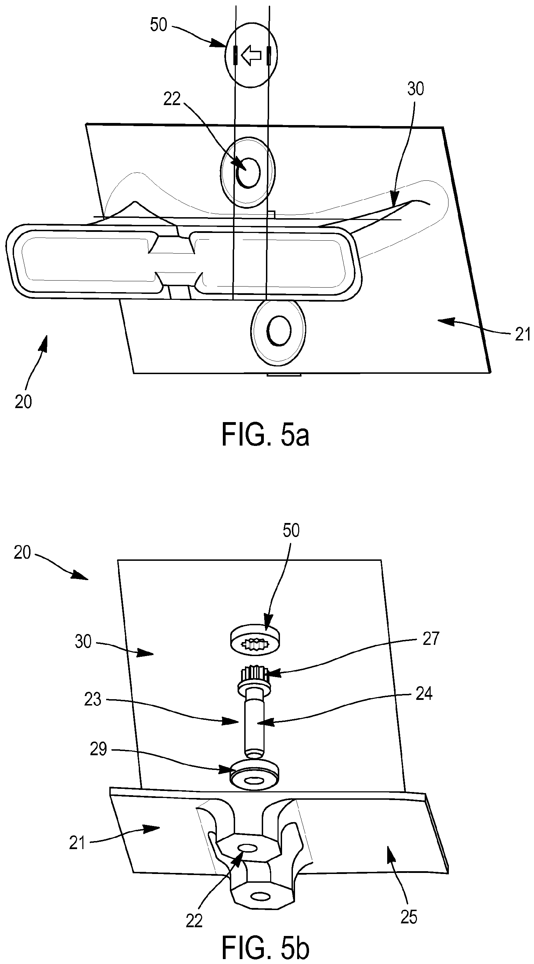

L'invention concerne un bouchon pour empêcher la corrosion d'un orifice de fixation d'un pied d'une aube de redresseur tel que l'orifice de fixation 22 du pied 21 de l'aube 20 préalablement décrit et illustré à la figure 2b. Les figures 5a et 5b montrent ledit pied 21 en perspective selon deux angles de prise de vue : la surface supérieure 26 du pied 21 est visible sur la figure 5a, tandis que la surface inférieure 25 du pied 21 est visible sur la figure 5b. Comme expliqué précédemment, le pied 21 comporte deux orifices de fixation 22 situés de part et d'autre du corps 30 de l'aube 20. Chaque orifice de fixation 22 est destiné à recevoir un moyen de vissage ainsi qu'une coupelle tel que le moyen de vissage 23 et la coupelle 29 préalablement évoqués et illustrés à la figure 3. Ledit moyen de vissage 23 et ladite coupelle 29 sont visibles à la figure 5b. De plus, chaque orifice de fixation 22 comporte une partie inférieure 22a cylindrique débouchant au niveau de la surface inférieure 25, et une partie supérieure 22b cylindrique débouchant au niveau de la surface supérieure 26. La partie supérieure 22b présente un diamètre Ds supérieur au diamètre Di de la partie inférieure 22a de sorte à former un épaulement 28 entre la partie inférieure 25 et la partie supérieure 26 servant d'appui à la coupelle 29 et à la tête 27 du moyen de vissage 23.

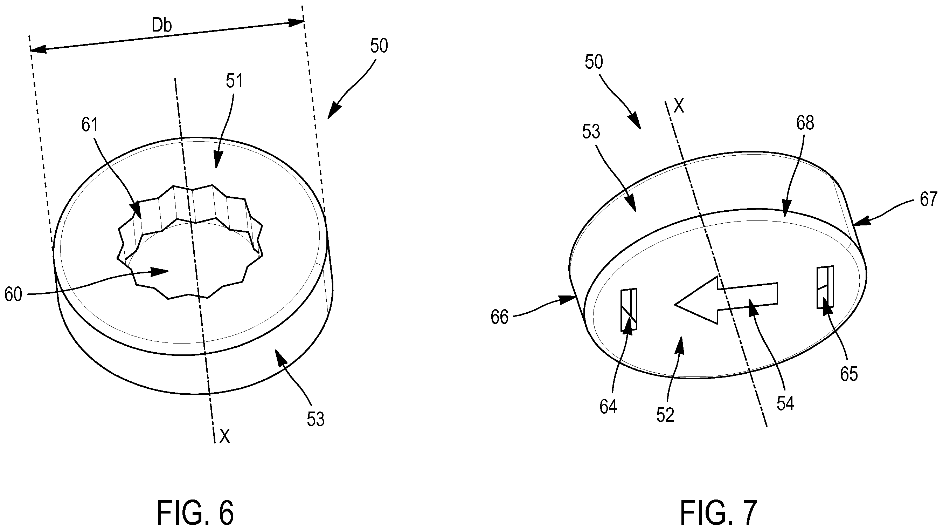

Les figures 5a et 5b montrent également un bouchon 50 selon un premier mode de réalisation. Ledit bouchon 50 est représenté plus précisément aux figures 6 et 7, sur lesquelles sont visibles respectivement une face inférieure 51 et une face supérieure 52 dudit bouchon 50. Le bouchon 50 est de forme externe sensiblement complémentaire à la forme de la partie supérieure 22b de l'orifice de fixation 22 et de dimensions externes au repos supérieures aux dimensions de ladite partie supérieure 22b. Ainsi, le bouchon 50 est de forme générale sensiblement cylindrique, et s'étend selon une direction axiale X. Autrement dit, le bouchon 50 comporte une paroi latérale 53 globalement cylindrique s'étendant selon la direction axiale X entre sa face inférieure 51 et sa face supérieure 52.

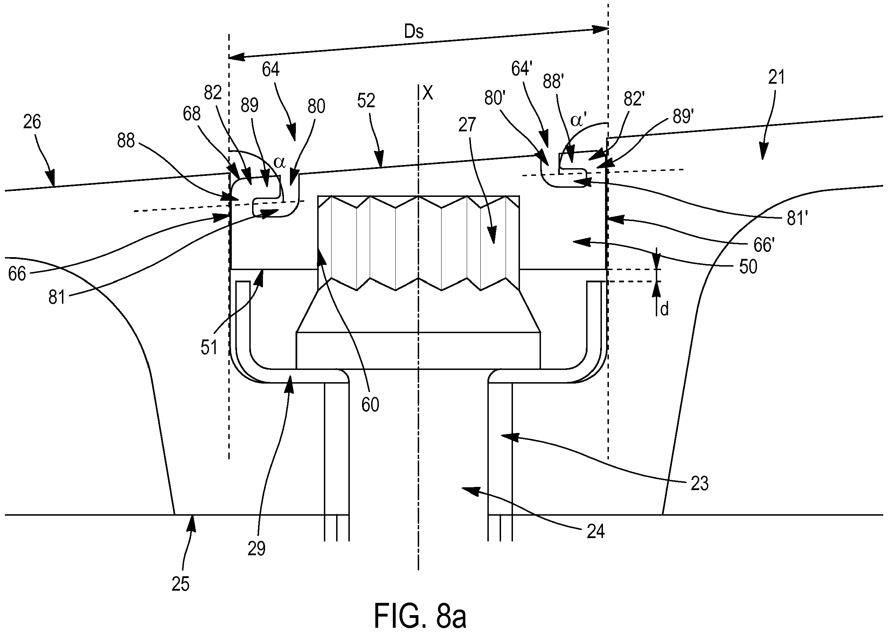

Toutefois, la face inférieure 51 et la face supérieure 52 du bouchon 50 sont légèrement inclinées l'une par rapport à l'autres. Autrement dit, la face inférieure 51 et la face supérieure 52 du bouchon 50 ne sont pas parallèles l'une par rapport à l'autre. Cette configuration est avantageuse car la surface inférieure 25 du pied 21 de l'aube 20 et l'épaulement 28 ne sont pas parfaitement parallèles l'un par rapport à l'autre. Placer la face supérieure 52 du bouchon 50 dans le prolongement de la surface supérieure 26 du pied 21 de l'aube 20, tel que cela est visible à la figure 8a, permet d'éviter que le flux d'air s'écoulant au niveau de la surface supérieure 26 du pied 21 de l'aube 20 ne soit perturbé par des discontinuités géométriques.

On note que dans d'autres modes de réalisation, la face inférieure 51 et la face supérieure 52 sont sensiblement parallèles l'une par rapport à l'autre, au détriment de la qualité du flux aérodynamique dans la veine secondaire. Ces configurations permettent toutefois de limiter les risques de mauvais positionnement du bouchon 50 dans la partie supérieure 22b de l'orifice de fixation 22.

Par ailleurs, la face supérieure 52 du bouchon 50 comprend un repère visuel 54 permettant de placer le bouchon 50 dans la partie supérieure 22b de l'orifice de fixation 22 selon une position prédéterminée. En effet, lorsque la face supérieure 52 et la face inférieure 51 du bouchon 50 ne sont pas symétriques, le repère visuel 54 permet d'aider à placer correctement le bouchon 50 dans la partie supérieure 22b de l'orifice de fixation 22 et ainsi d'éviter toute erreur lors du montage. Par exemple, l'avant ou l'arrière de la turbomachine est indiqué par la pointe d'une flèche représentée sur la face supérieure 52 du bouchon 50. On note qu'un tel repère visuel 54 est optionnel.

En outre, le bouchon 50 est composé d'un matériau déformable élastiquement, par exemple un élastomère, ce qui lui permet d'être maintenu en position serrée dans la partie supérieure 22b de l'orifice de fixation 22. En effet, à l'état de repos, c'est-à-dire à l'état dans lequel le bouchon 50 n'est pas soumis à des contraintes externes, le diamètre Db du bouchon 50 est légèrement supérieur au diamètre Ds de la partie supérieure 22b de l'orifice de fixation 22. Ainsi, il est nécessaire de comprimer le bouchon 50 pour l'introduire dans la partie supérieure 22b de l'orifice de fixation 22. Lorsque le bouchon 50 est positionné dans la partie supérieure 22b de l'orifice de fixation 22, il cherche à se détendre et appuie sur les parois de l'orifice de fixation 22, empêchant l'infiltration d'eau autour du bouchon 50. La surface de contact entre le bouchon 50 et les parois de la partie supérieure 22b de l'orifice de fixation 22 est alors optimale. On note que le matériau constituant le bouchon 50 est également imperméable, pour éviter l'introduction d'eau dans l'orifice de fixation 22 à travers le bouchon 50.

De plus, le bouchon 50 comporte une ouverture 60 pratiquée sur sa face inférieure 51. L'ouverture 60 est destinée à recevoir la tête 27 du moyen de vissage 23. Comme cela est visible à la figure 6, l'ouverture 60 présente des empreintes 61 destinées à épouser la forme de la tête 27 du moyen de vissage 23. En d'autres termes, l'ouverture 60 pratiquée sur la face inférieure 51 du bouchon 50 présente une géométrie sensiblement complémentaire à celle de la tête 27 du moyen de vissage 23. Ainsi, le bouchon 50 s'emboîte parfaitement, et avantageusement selon un montage légèrement serré, sur la tête 27 du moyen de vissage 23 jusqu'à venir en butée sur la partie extrémale de ladite tête 27. Un maintien optimal du bouchon 50 sur la tête 27 du moyen de vissage 23 est donc assuré, et des rotations ou mouvements dudit bouchon 50 lors du fonctionnement de la turbomachine sont évités. Par ailleurs, une telle configuration permet d'éviter des bourrelets de matière qui pourraient apparaître avec un montage comprenant un bouchon 50 dont l'ouverture 60 sur la face inférieure 51 ne serait pas complémentaire à celle de la tête 27 du moyen de vissage 23.

On note que dans d'autres modes de réalisation, l'ouverture 60 ne présente pas d'empreintes 61 : l'ouverture 60 est par exemple cylindrique. Le moule de fabrication du bouchon 50 est alors simplifié.

Par ailleurs, le bouchon 50 comporte un arrondi 68 circonférentiel entre la face supérieure 52 et la paroi latérale 52, comme cela est visible aux figures 7 et 8a. De plus, le bouchon 50 comporte un premier trou borgne 64 et un deuxième trou borgne 64' pratiqués sur la face supérieure 52 du bouchon 50 et diamétralement opposés. Les trous borgnes 64, 64' sont utiles pour supprimer des bourrelets de matière qui pourraient apparaître sur le bouchon 50 au niveau de l'arrondi 68, plus précisément dans l'espace libre entre l'arrondi 68 et le pourtour de la partie supérieure 22b de l'orifice de fixation 22. Prévoir un espace libre à cet endroit permet de canaliser les bourrelets afin d'éviter tout dépassement de matière qui créerait une irrégularité du flux aérodynamique dans la veine secondaire.

Le premier trou borgne 64 est d'une forme telle que lorsque le bouchon 50 subit une déformation élastique faisant apparaître un bourrelet entre la face supérieure 52 et une première zone latérale 66 du bouchon 50 située à proximité dudit premier trou borgne 64 ledit bourrelet est éliminé par déformation élastique dudit premier trou borgne 64. De même, le deuxième trou borgne 64' est d'une forme telle que lorsque le bouchon 50 subit une déformation élastique faisant apparaître un bourrelet entre la face supérieure 52 et une deuxième zone latérale 66' du bouchon 50 située à proximité dudit deuxième trou borgne 64' ledit bourrelet est éliminé par déformation élastique dudit deuxième trou borgne 64'.

Plus précisément, en référence à la figure 8a, le premier trou borgne 64 comporte une partie extrémale débouchante 80 sur la face supérieure 52, et une partie extrémale borgne 81. La partie extrémale débouchante 80 s'étend parallèlement à la première zone latérale 66 du bouchon 50. Au contraire, la partie extrémale borgne 81 est inclinée par rapport à la première zone latérale 66 et en direction de la première zone latérale 66, d'un premier angle d'inclinaison α valant sensiblement 90 degrés. Le premier trou borgne 64 délimite donc un premier crochet 82 de matière dont une première portion 88 s'étend le long de la première zone latérale 66 et une deuxième portion 89 s'étend le long de la face supérieure 52 du bouchon. Lorsque le premier crochet 82 de matière subit une déformation créant un bourrelet à l'intersection entre la première portion 88 et la deuxième portion 89, la deuxième portion 89 pivote en direction de la face inférieure 51 du bouchon 50, pénétrant dans le premier trou borgne 64. Le bourrelet est ainsi éliminé.

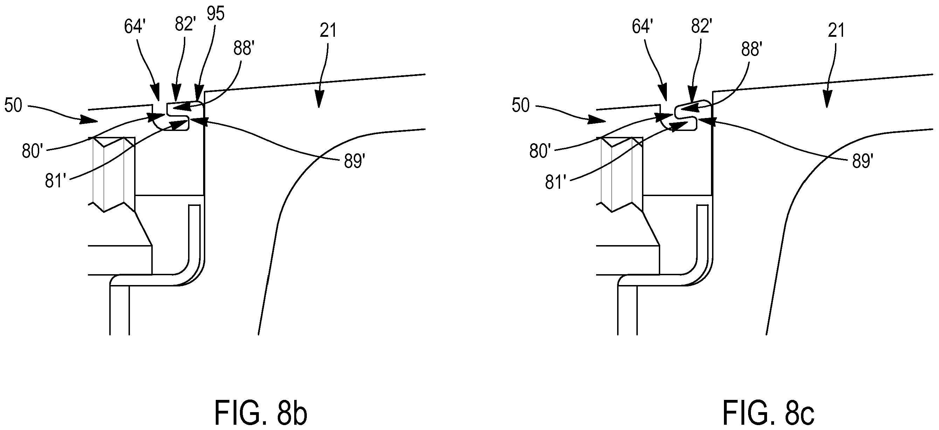

De même, en référence aux figures 8a, le deuxième trou borgne 64' comporte une partie extrémale débouchante 80' sur la face supérieure 52, et une partie extrémale borgne 81'. La partie extrémale débouchante 80' s'étend parallèlement à la deuxième zone latérale 66' du bouchon 50. Au contraire, la partie extrémale borgne 81' est inclinée par rapport à la deuxième zone latérale 66' et en direction de la deuxième zone latérale 66', d'un deuxième angle d'inclinaison α' valant sensiblement 90 degrés. Le deuxième trou borgne 64' délimite donc un deuxième crochet 82' de matière dont une première portion 88' s'étend le long de la deuxième zone latérale 66' et une deuxième portion 89' s'étend le long de la face supérieure 52 du bouchon 50. En référence à la figure 8b, lorsque le deuxième crochet 82' de matière subit une déformation créant un bourrelet 95 à l'intersection entre la première portion 88' et la deuxième portion 89', la deuxième portion 89' pivote en direction de la face inférieure 51 du bouchon 50, pénétrant dans le deuxième trou borgne 64', comme cela est montré à la figure 8c. Le bourrelet 95 est ainsi éliminé.

On note que dans le mode de réalisation présenté à la figure 8a, le premier trou borgne 64 et le deuxième trou borgne 64' sont sensiblement diamétralement opposés l'un par rapport à l'autre : le premier trou borgne 64 et le deuxième trou borgne 64' sont sensiblement symétriques selon une symétrie centrale d'axe X et d'angle 180 degrés. Les bourrelets de matière sont ainsi éliminés de part et d'autre du bouchon 50.

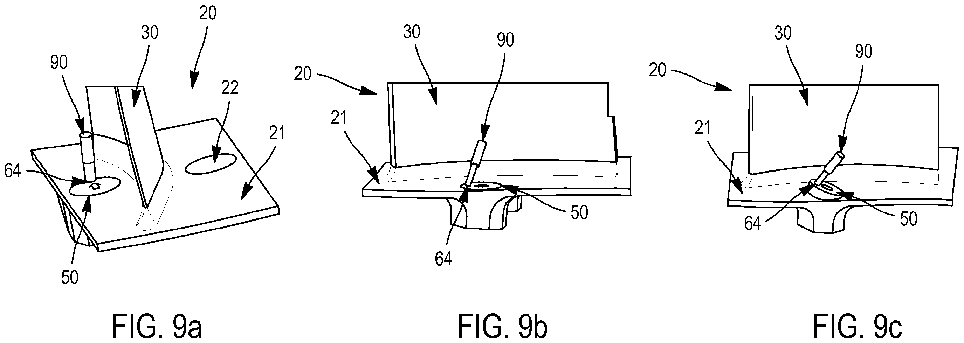

En outre les trous borgnes 64, 64' sont utiles pour retirer le bouchon 50 via un outil de retrait 90 (montré aux figures 9a, 9b et 9c). Pour retirer le bouchon 50 de la partie supérieure 22b de l'orifice de fixation 22, l'outil de retrait 90 est inséré dans la partie extrémale débouchante d'un trou borgne 64, 64' et calé dans la partie extrémale borgne 81, 81', comme le montre la figure 9b. Une rotation de l'outil de retrait 90 permet alors de retirer le bouchon 50. On remarque à la figure 7 que la partie extrémale débouchante 80, 80' est en forme de fente. Une telle forme permet de placer correctement la pointe de l'outil de retrait 90 (tel qu'un tournevis plat) pour que l'emplacement de la partie extrémale borgne 81, 81' soit facilement repérable, et ainsi faciliter le retrait du bouchon 50. Par ailleurs, de par la configuration des trous borgnes 64, 64', l'outil de retrait 90 ne dispose que d'un seul degré de liberté. Ainsi, en plaçant le bouchon 50 dans l'orifice de fixation 22 de telle sorte que la fente s'étende orthogonalement au corps 30 de l'aube 20, l'outil de retrait 90 ne peut effectuer que des rotations dans un plan parallèle au corps 30 de l'aube 22 lors du retrait du bouchon 50. Le corps 30 de l'aube 22 ne constitue donc pas un obstacle pour le retrait du bouchon 50, et ne risque pas d'être endommagé.

On note que dans d'autres modes de réalisation, les parties extrémales débouchantes 80, 80' des premier et/ou deuxième trou(s) borgne(s) 64, 64' présente(nt) une forme différente de celle d'une fente, par exemple une forme cylindrique ou en arc de cercle, au niveau de leur(s) extrémité(s) débouchante(s). Dans d'autres modes de réalisation, le bouchon 50 présente sur sa face supérieure 52 un plus grand nombre de trous borgnes 64, 64', par exemple trois ou quatre, afin de supprimer des bourrelets apparaissant dans différents endroits de la paroi latérale 53 du bouchon 50.

Dans d'autres modes de réalisation, la partie extrémale débouchante 80, 80' et la partie extrémale borgne 81, 81' du premier trou borgne 64 et/ou du deuxième trou borgne 64' sont dans la continuité l'une de l'autre, c'est-à-dire orientées selon une même et unique inclinaison. Il importe que l'angle de cette inclinaison permette un bras de levier suffisant pour retirer le bouchon 50 à l'aide de l'outil de retrait 90, et permette au premier trou borgne 64 et/ou au deuxième trou borgne 64' de se déformer pour absorber les éventuels bourrelets. Il importe également que les configurations des premier trou borgne 64 et deuxième trou borgne 64' soient simples pour éviter de complexifier la réalisation du bouchon.

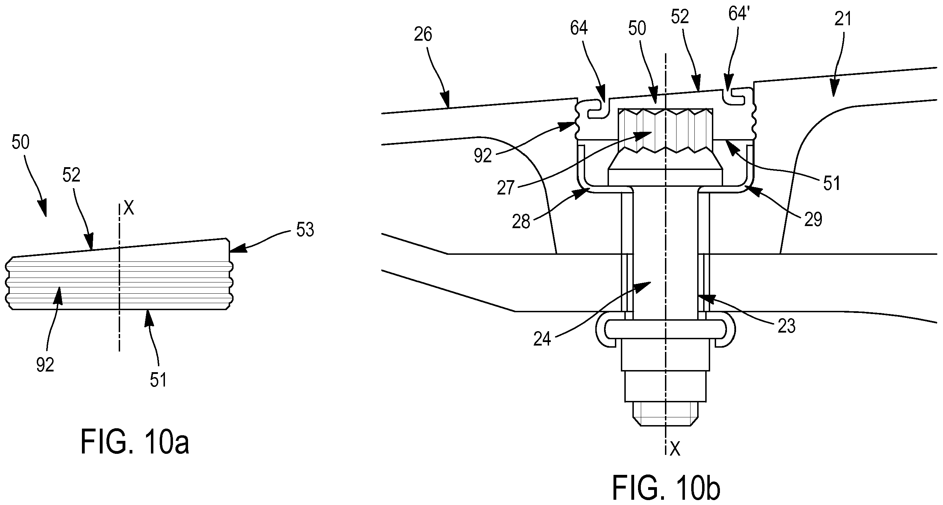

La figure 9 illustre un mode de réalisation dans lequel le bouchon 50 présente des ondulations 92 successives sur sa paroi latérale 53, lesdites ondulations 92 étant circonférentielles et sensiblement perpendiculaires à la direction axiale X dudit bouchon 50. De telles ondulations 92 permettent d'améliorer la tenue et l'adhérence du bouchon 50 dans la partie supérieure 22b de l'orifice de fixation 22. La figure 10 montre le bouchon 50 en position dans la partie supérieure 22b de l'orifice de fixation 22.

On note que le nombre d'ondulations 92 diffère selon les modes de réalisation, en fonction de la taille du bouchon 50 par exemple.

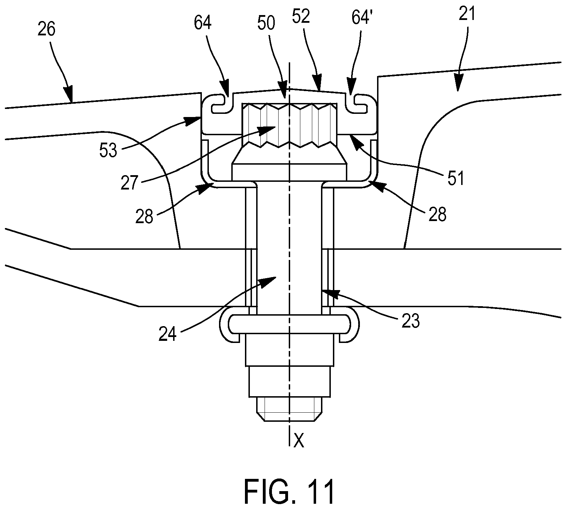

La figure 11 représente un autre mode de réalisation du bouchon 50 selon l'invention, en position dans la partie supérieure 22b de l'orifice de fixation 22. La face supérieure 52 dudit bouchon 50 est bombée. Une telle configuration permet d'éviter toute erreur de placement lors du montage du bouchon 50 dans la partie supérieure 22b de l'orifice de fixation 22 et ne nécessite pas d'ajouter des repères visuels 54 sur la face supérieure 52 du bouchon 50. Toutefois, le flux aérodynamique dans la veine est détérioré à cause de la discontinuité géométrique entre le bouchon 50 et la surface supérieure 26 du pied 21 de l'aube 20.

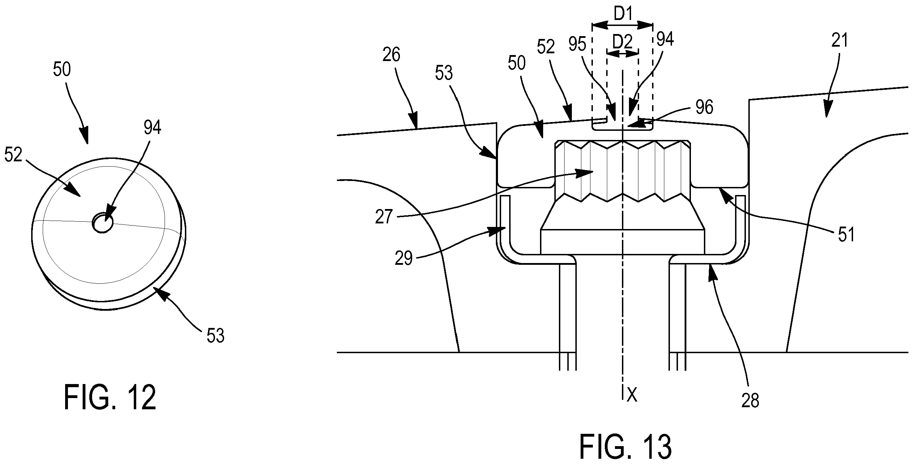

Les figures 12 et 13 présentent un mode de réalisation alternatif du bouchon 50 selon l'invention. Le bouchon 50 ne comporte qu'un trou borgne 94, au centre de la face supérieure 52 du bouchon 50. Ledit trou borgne 94 comprend deux parties : une partie extrémale débouchante 95 sur la face supérieure 52, et une partie extrémale borgne 96. Lesdites parties 95, 96 sont de forme cylindrique, la partie extrémale débouchante 95 présentant un diamètre supérieur au diamètre de la partie extrémale borgne 96. Il est donc possible de caler la pointe de l'outil de retrait 90 selon n'importe quelle direction dans la partie extrémale borgne 96. Les erreurs de placement du bouchon 50 dans la partie supérieure 22b de l'orifice de fixation 22 sont également réduites, étant donné que le bouchon 50 est symétrique. De plus, un tel bouchon 50 est réalisable avec un moule de fabrication simple. Toutefois, le flux aérodynamique dans la veine est détérioré à cause de la discontinuité géométrique entre le bouchon 50 et la surface supérieure 26 du pied 21 de l'aube 20.

## Revendications

1. Bouchon (50) pour empêcher la corrosion d'une partie supérieure (22b) d'un orifice de fixation (22) d'un pied (21) d'aube (20) de redresseur (14) de turbomachine, comportant :
▪ une face inférieure (51) comprenant une ouverture (60) destinée à recevoir une tête (27) d'un moyen de vissage (23),
▪ une face supérieure (52),
▪ une paroi latérale (53) sensiblement cylindrique et s'étendant selon une direction axiale (X) entre la face inférieure (51) et la face supérieure (52), ladite paroi latérale (53) comprenant une première zone latérale (66),
▪ le bouchon (50) est constitué d'un matériau déformable élastiquement, et présente un diamètre (Db) au repos et une élasticité lui permettant d'obstruer et d'être maintenu dans la partie supérieure (22b) de l'orifice de fixation (22) par déformation élastique, **caractérisé en ce que**,
▪ la face supérieure (52) comporte au moins un premier trou borgne (64, 94) dont la forme est telle que lorsque le bouchon (50) subit une déformation élastique faisant apparaître un bourrelet entre la face supérieure (52) et la première zone latérale (66) du bouchon (50), ledit bourrelet est éliminé par déformation élastique dudit premier trou borgne (64, 94).

2. Bouchon (50) selon la revendication 1, **caractérisé en ce que** le premier trou borgne (64) comprend une partie extrémale borgne (81) inclinée par rapport à la première zone latérale (66).

3. Bouchon (50) selon l'une quelconque des revendications 1 à 2, **caractérisé en ce que** le premier trou borgne (64) comporte une partie extrémale débouchante (80), ladite partie extrémale débouchante (80) présentant une forme de fente.

4. Bouchon (50) selon l'une quelconque des revendications 1 à 3, **caractérisé en ce que** la face supérieure (52) comporte un deuxième trou borgne (64'), ledit deuxième trou borgne (64') étant diamétralement opposé au premier trou borgne (64, 94).

5. Bouchon (50) selon la revendication 1, **caractérisé en ce que** le premier trou borgne (94) est positionné sensiblement au centre de la face supérieure (52), et comporte une partie débouchante cylindrique (95) suivi d'une partie borgne cylindrique (96), la partie extrémale borgne de la partie borgne cylindrique (96) présentant un diamètre (D1) supérieur au diamètre (D2) de la partie extrémale débouchante de la partie débouchante cylindrique (95).

6. Bouchon (50) selon l'une des revendications 1 à 5, **caractérisé en ce que** la paroi latérale (53) comprend une succession d'ondulations (92) circonférentielles et sensiblement perpendiculaires à la direction axiale (X) dudit bouchon (50).

7. Système d'obturation comprenant :
▪ un orifice de fixation (22) d'un pied (21) d'une aube (20), l'orifice de fixation (22) comprenant une partie supérieure (22b)
▪ un bouchon (50) selon les revendications 1 à 6,
**caractérisé en ce que** le bouchon (50) est de forme externe sensiblement complémentaire à la forme de la partie supérieure (22b) de l'orifice de fixation (22) et de diamètre (Db) au repos supérieures aux diamètre (Ds) de ladite partie supérieure (22b).

8. Système d'obturation selon la revendication 7, **caractérisé en ce que** la face supérieure (52) du bouchon (50) est inclinée par rapport à la face inférieure (51) de sorte que lorsque le bouchon (50) est placé dans la partie supérieure (22b) de l'orifice (22), la face supérieure (52) du bouchon (50) est dans la continuité géométrique du pied (21) de l'aube (20).

9. Système d'obturation selon la revendication 8, **caractérisé en ce que** la face supérieure (52) du bouchon (50) comprend des repères visuels (54) permettant de placer le bouchon (50) dans la partie supérieure (22b) de l'orifice de fixation (22) selon une position prédéterminée.

10. Système d'obturation selon l'une des revendications 7 à 9, **caractérisé en ce qu'**il comprend un moyen de vissage (23) comportant :
▪ une tige (24) destinée à être positionnée dans une partie inférieure (22a) de l'orifice de fixation (22)
▪ une tête (27) destinée à être positionnée dans la partie supérieure (22b) de l'orifice de fixation (22) et bloquée par un épaulement (28) entre la partie inférieure (22a) et la partie supérieure (22b),
l'ouverture (60) pratiquée sur la face inférieure (51) du bouchon (50) présentant une géométrie sensiblement complémentaire à celle de la tête (27) du moyen de vissage (23).

11. Aube (20) de redresseur comportant un pied (21), ladite aube (20) étant **caractérisée en ce que** ledit pied (21) de l'aube (20) comporte un système d'obturation selon les revendications 7 à 10.

## Patentansprüche

1. Stopfen (50) zum Verhindern der Korrosion eines oberen Teils (22b) einer Befestigungsöffnung (22) eines Fußes (21) einer Schaufel (20) eines Turbomaschinen-Richtgeräts (14), umfassend:
▪ eine untere Seite (51), umfassend einen Durchbruch (60), der zum Aufnehmen eines Kopfes (27) eines Verschraubungsmittels (23) bestimmt ist,
▪ eine obere Seite (52),
▪ eine deutlich zylindrische Seitenwand (53), die sich gemäß einer axialen Richtung (X) zwischen der unteren Seite (51) und der oberen Seite (52) der genannten Seitenwand (53) erstreckt, umfassend einen ersten seitlichen Bereich (66),
▪ der Stopfen (50) ist aus einem elastisch verformbaren Material gebildet und weist einen Durchmesser (Db) in Ruhe und eine Elastizität auf, die es ihm ermöglichen, zu verschließen und in dem oberen Teil (22b) der Befestigungsöffnung (22) per elastischer Verformung festgehalten zu sein, **dadurch gekennzeichnet, dass**
▪ die obere Seite (52) wenigstens ein erstes Sackloch (64, 94) umfasst, dessen Form derart ist, dass der Stopfen (50) einer elastischen Verformung unterzogen ist, die einen Wulst zwischen der oberen Seite (52) und dem ersten seitlichen Bereich (66) des Stopfens (50) auftreten lässt, wobei der genannte Wulst per elastischer Verformung des genannten ersten Sacklochs (64, 94) beseitigt ist.

2. Stopfen (50) gemäß Anspruch 1, **dadurch gekennzeichnet, dass** das erste Sackloch (64) einen End-Sackteil (81) umfasst, der im Verhältnis zum ersten seitlichen Bereich (66) geneigt ist.

3. Stopfen (50) gemäß irgendeinem der Ansprüche 1 bis 2, **dadurch gekennzeichnet, dass** das erste Sackloch (64) einen End-Sackteil (80) umfasst, wobei der genannte End-Sackteil (80) eine Schlitzform aufweist.

4. Stopfen (50) gemäß irgendeinem der Ansprüche 1 bis 3, **dadurch gekennzeichnet, dass** die obere Seite (52) ein zweites Sackloch (64') aufweist, wobei das genannte zweite Sackloch (64') dem ersten Sackloch (64, 94) diametral entgegengesetzt ist.

5. Stopfen (50) gemäß Anspruch 1, **dadurch gekennzeichnet, dass** das erste Sackloch (94) deutlich im Zentrum der oberen Seite (52) angeordnet ist und einen zylindrischen einmündenden Teil (95) gefolgt von einem zylindrischen Sackteil (96) umfasst, wobei der End-Sackteil des zylindrischen Sackteils (96) einen größeren Durchmesser (D1) als den Durchmesser (D2) des einmündenden End-Sackteils des zylindrischen einmündenden Teils (95) aufweist.

6. Stopfen (50) gemäß einem der Ansprüche 1 bis 5, **dadurch gekennzeichnet, dass** die Seitenwand (53) eine Folge von umlaufenden und zur axialen Richtung (X) des genannten Stopfens (50) deutlich lotrechten Wellungen (92) umfasst.

7. Verschlusssystem, umfassend:
▪ eine Befestigungsöffnung (22) eines Fußes (21) einer Schaufel (20), wobei die Befestigungsöffnung (22) einen oberen Teil (22b) umfasst,
▪ einen Stopfen (50) gemäß den Ansprüchen 1 bis 6,
**dadurch gekennzeichnet, dass** der Stopfen (50) eine äußere deutlich komplementäre Form zum oberen Teil (22b) der Befestigungsöffnung (22) und einen Durchmesser (Db) in Ruhe aufweist, die größer sind als die Durchmesser (Ds) des genannten oberen Teils (22b).

8. Verschlusssystem gemäß Anspruch 7, **dadurch gekennzeichnet, dass** die obere Seite (52) des Stopfens im Verhältnis zu unteren Seite (51) derart geneigt ist, dass, wenn der Stopfen (50) im oberen Teil (22b) der Öffnung (22) angeordnet ist, die obere Seite (52) des Stopfens (50) in der geometrischen Fortsetzung des Fußes (21) der Schaufel (20) ist.

9. Verschlusssystem gemäß Anspruch 8, **dadurch gekennzeichnet, dass** die obere Seite (52) des Stopfens (50) visuelle Markierungen (54) umfasst, die das Anordnen des Stopfens (50) im oberen Teil (22b) der Befestigungsöffnung (22) gemäß einer vorbestimmten Position zulassen.

10. Verschlusssystem gemäß einem der Ansprüche 7 bis 9, **dadurch gekennzeichnet, dass** es ein Verschraubungsmittel (23) umfasst, umfassend:
▪ einen Stift (24), der dazu bestimmt ist, in einem unteren Teil (22a) der Befestigungsöffnung (22) positioniert zu sein
▪ einen Kopf (27), der dazu bestimmt ist, im oberen Teil (22b) der Befestigungsöffnung (22) angeordnet und durch einen Absatz (28) zwischen dem unteren Teil (22a) und dem oberen Teil (22b) verrastet zu sein,
wobei der auf der unteren Seite (51) des Stopfens (50) praktizierte Durchbruch (60) eine Geometrie aufweist, die zu der des Kopfes (27) des Verschraubungsmittels (23) deutlich komplementär ist.

11. Schaufel (20) eines Richtgeräts, umfassend einen Fuß (21), wobei die genannte Schaufel (20) **dadurch gekennzeichnet ist, dass** der genannte Fuß (21) der Schaufel (20) ein Verschlusssystem gemäß den Ansprüchen 7 bis 10 umfasst.

## Claims

1. Plug (50) for preventing the corrosion of a top portion (22b) of an attachment opening (22) of a root (21) of a blade (20) of a guide vane (14) of a turbomachine, comprising:
• a bottom surface (51) including an opening (60) for receiving a head (27) of a tightening means (23),
• a top surface (52),
• a substantially cylindrical side wall (53) extending along an axial direction (X) between the bottom surface (51) and the top surface (52), said side wall (53) including a first side area (66),
• the plug (50) is formed of an elastically deformable material, and has a diameter (Db) at rest and an elasticity enabling said plug to block and to be held in the top portion (22b) of the attachment opening (22) by elastic deformation, **characterized in that**:
• the top surface (52) comprises at least one first blind hole (64, 94) the shape of which is such that, when the plug (50) is subjected to an elastic deformation that causes a ridge to appear between the top surface (52) and the first side area (66) of the plug (50), said ridge is removed by elastic deformation of said first blind hole (64, 94).

2. Plug (50) according to claim 1, **characterized in that** the first blind hole (64) includes a blind extremal portion (81) inclined with respect to the first side area (66).

3. Plug (50) according to any of claims 1 to 2, **characterized in that** the first blind hole (64) comprises an emerging extremal portion (80), said emerging extremal portion (80) having a slot shape.

4. Plug (50) according to any of claims 1 to 3, **characterized in that** the top surface (52) comprises a second blind hole (64'), said second blind hole (64') being diametrically opposite to the first blind hole (64, 94).

5. Plug (50) according to claim 1, **characterized in that** the first blind hole (94) is positioned substantially at the center of the top surface (52), and comprises an cylindrical emerging portion (95) followed by a cylindrical blind portion (96), the blind extremal portion (96) of the blind cylindrical portion having a diameter (D1) greater than the diameter (D2) of the emerging extremal portion (95) of the emerging cylindrical portion.

6. Plug (50) according to one of claims 1 to 5, **characterized in that** the side wall (53) includes a succession of circumferential undulations (92) substantially perpendicular to the axial direction (X) of said plug (50).

7. Sealing system including:
• an attachment opening (22) of a root (21) of a blade (20), the attachment opening (22) including a top portion (22b),
• a plug (50) according to claims 1 to 6,
**characterized in that** the plug (50) is of external shape substantially complementary to the shape of the top portion (22b) of the attachment opening (22) and of diameter (Db) at rest greater than the diameter (Ds) of said top portion (22b).

8. Sealing system according to claim 7, **characterized in that** the top surface (52) of the plug (50) is inclined with respect to the bottom surface (51) such that when the plug (50) is placed in the top portion (22b) of the attachment opening (22), the top surface (52) of the plug (50) is in the geometric continuity of the root (21) of the blade (20).

9. Sealing system according to claim 8, **characterized in that** the top surface (52) of the plug (50) includes visual marks (54) making it possible to place the plug (50) in the top portion (22b) of the attachment opening (22) according to a predetermined position.

10. Sealing system according to one of claims 7 to 9, **characterized in that** it includes a tightening means (23) comprising:
• a rod (24) intended to be positioned in a bottom portion (22a) of the attachment opening (22),
• a head (27) intended to be positioned in the top portion (22b) of the attachment opening (22) and blocked by a shoulder (28) between the bottom portion (22a) and the top portion (22b),
the opening (60) made on the bottom surface (51) of the plug (50) having a geometry substantially complementary to that of the head (27) of the tightening means (23).

11. Blade (20) of a guide vane comprising a root (21), said blade (20) being **characterized in that** said root (21) of the blade (20) comprises a sealing system according to claims 7 to 10.
